# EUROPEAN PATENT APPLICATION

(11) **EP 1 496 274 A1**
(43) Date of publication of application: **12.01.2005**
(21) Application number: 04102268.2
(22) Date of filing: 24.05.2004
(51) Int. Cl.: F16B 41/00, B60C 27/04

(54) **Fast locking element**

(30) Priority: 08.07.2003 IT TO20030108 U
(71) Applicant: Groppo, Andrea, 12040 Ceresole d'Alba (CN) (IT); Groppo, Lazzaro, 12040 Sanfre' (CN) (IT)
(72) Inventor: Groppo, Andrea, 12040 Ceresole d'Alba (CN) (IT); Groppo, Lazzaro, 12040 Sanfre' (CN) (IT)
(74) Representative: Robba, Pierpaolo

(57) **Abstract**

Fast locking element, in particular for anti-skid devices for vehicle wheels, comprising an external bushing (3) and an internal bushing (5), wherein said external bushing (3) and said internal bushing (5) present respectively an internal wall (14) and an external wall (18) both being shaped so that, by rotating one of the two bushings (3,5) with respect to the other, a radial compression of said internal bushing (5) with respect to said external bushing (3) occurs.

## Description

The present invention concerns a fast locking element.

More in particular, the present invention concerns a fast locking element of the type that may be used in an anti-skid device that can be applied to a vehicle wheel under conditions of snow-covered or icy road.

There are known in the art anti-skid devices for a vehicle wheel, said devices comprising a fixing disk which is fixed to the wheel rim and which is provided with openings for the passage of screws or fixing bolts, and a support disk which is locked on the fixing disk and which presents a plurality of anti-skid arms.

In order to avoid to dismount and mount again the anti-skid device each time the road conditions change, the fixing disk remains permanently fixed to the wheel rim and, only when it is needed by the road conditions, the user mounts the support disk carrying the anti-skid arms.

In order to solve the problem of mounting in a permanent way the fixing disk to a wheel rim, fast locking elements have been realised which perform the role of mechanic interface between the bolts of the fixing disk, said bolts being provided together with the anti-skid device, and the bolts of the wheel rim. In this way, it is sufficient to provide for a limited amount of openings on the fixing disk which is realised in a limited number of typologies for being adapted to all types of a vehicle wheel rim.

An example of such fast locking element, or adaptor, is known by the US patent 4,884,933.

The fast locking element described in the above mentioned patent comprises a cap-shaped internal part and an external part, cap-shaped as well and overlapping the internal part, wherein in the wall of the internal part are present longitudinal slits allowing to radially deform the internal part around the hexagon nut of the rim bolt or nut of the vehicle.

By screwing or pressing the external part on the internal part in a longitudinal direction, the shaped gripping means can be pressed against the head of a rim bolt so as to form a link between a bolt of the fixing disk and the rim bolt itself.

However, a fast locking element like that described in the patent US 4,884,933 can exhibit some seal problems between the internal and the external part. In fact, since the locking occurs by a movement in longitudinal direction, it can happen that, as the time goes by and by using frequently the adaptor again and again, the external part is not any more able to exert a sufficient pressure on the internal part which in turn keeps the wheel bolt locked, thereby jeopardising the working of the whole fast locking element.

It is therefore an object of the present invention to provide a fast locking element allowing a reliable and effective seal between the bolts of a fixing disk and the bolts of a wheel rim in an anti-skid device.

This and other objects are obtained by means of a fast locking element according to the present invention as claimed in the hereby attached claims.

The fast locking element according to the invention advantageously allows to link whatever type of fixing disk bolt with whatever wheel rim bolt between them.

Besides, the mounting and the dismounting of the locking element according to the invention is extremely easy and does not require the use of particular tools.

The invention will be now described in detail with particular reference to the hereby attached figures, provided as non-limitative examples, wherein:
- Figure 1 is a perspective view of a fast locking element according to the invention;
- Figures 2 and 3 are respectively a longitudinal section view and a top view of an external bushing of a fast locking element according to the invention;
- Figure 4 is a top view of an internal bushing of a fast locking element according to the invention;
- Figure 5 is a longitudinal section of a fast locking element according to the invention and linking a fixing disk bolt with a wheel rim bolt in an anti-skid device.

With reference to the figures from 1 to 4, the fast locking element 1 according to the invention comprises a pair of bushings, respectively external 3 and internal 5, the latter being received inside the external bushing 3.

The internal bushing 5 comprises two cylindrical circular portions 19 and 22 having a common generating line 17 and wherein the cylindrical portion 19 exhibits a diameter lower than the cylindrical portion 22.

Moreover, the internal bushing 5 presents an axial hexagon hole 15 able to receive the hexagon head of a bolt or nut of a wheel rim.

A cut 23 interrupts longitudinally the cylindrical portions 19,22 so as to allow the elastic compression of the internal bushing 5 in radial direction.

The external bushing 3 comprises a cylindrical body wherein it is obtained an axial hole 7, able to receive said internal bushing 5, in which are defined two cylindrical circular seats 11 and 13 having a common generating line 12 and in which the more internal cylindrical seat 11 exhibits a diameter lower than the cylindrical seat 13.

Said hole 7 further comprises a threaded portion 10, the central axis of which is aligned with the axis of the more external cylindrical circular seat 13.

Said external bushing 3 further exhibits an hexagon projection 8 arranged around the central hole 7 in which an hexagon nut for rotating the bushing 3 can be inserted.

A lower edge 21 having an elliptical shape prevents that the internal bushing 5 can go out of the external bushing 3.

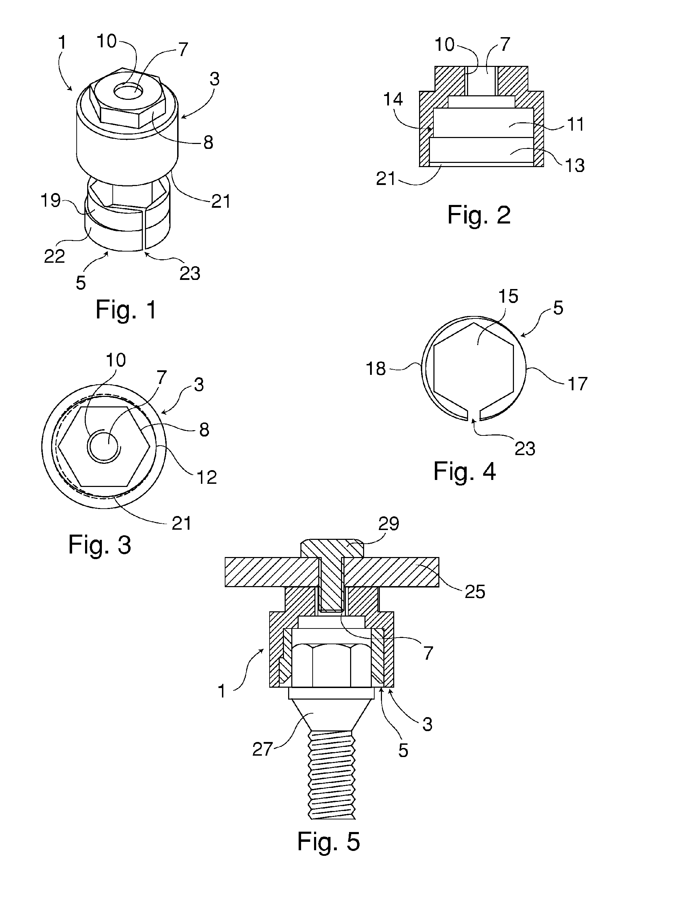

With reference to the figure 5, it is shown a fast locking element 1 allowing to link a bolt 29 of a fixing disk 25 of an anti-skid device for vehicle wheels and the head of a bolt 27 of a (not shown) wheel rim.

Thanks to the hexagon hole 15 of the internal bushing 5, the fast locking element 1 is positioned on the head of the rim bolt 27.

Successively, thanks to the hexagon projection 8 existing on the head of the external bushing 3 allowing the engagement with an hexagon key, the locking element 1 is rotated on the rim bolt 27.

During the rotation movement, the internal wall 14 of the external bushing 3 interferes with the external wall 18 of the internal bushing 5 that is radially compressed against the head of the bolt 27, thereby realising a safe and effective seal between the bushing 5 and the head of the bolt 27.

Finally, an opening of the fixing disk 25 of the anti-skid device is positioned in correspondence with the hole 7 of the external bushing 3 and the bolt 29 is screwed into the threaded portion 10 of the hole 7 in order to lock the fixing disk 25 to the fast locking element 1, thereby realising a safe and permanent link between the fixing disk 25 and the bolt 27 of the rim.

It is clear that what has been described is given as a non-limitative example and that variants and modifications are possible without departing from the field of protection of the invention.

## Claims

1. Fast locking element comprising an external bushing (3) and an internal bushing (5), **characterised in that** said external bushing (3) and said internal bushing (5) respectively present an internal wall (14) and an external wall (18) both shaped so that by rotating one of said bushings (3,5) with respect to the other, a radial compression of said internal bushing (5) with respect to said external bushing (3) occurs without axial displacement between the two bushings, said radial compression being possible thanks to a longitudinal cut (23) provided on said external bushing (5).

2. Fast locking element according to claim 1, wherein said internal bushing (5) comprises two overlapping cylindrical circular portions (19,22) having different diameters and a common generating line (17), said internal bushing (5) further presenting an hexagon axial hole (15) able to receive the hexagon head of a bolt or nut (27) on which said locking element must be locked, and wherein said external bushing (3) comprises a cylindrical body in which it is obtained an axial hole (7) able to receive said internal bushing (5) in which are defined two cylindrical circular seats (11,13) having a common generating line (12), and wherein the more internal cylindrical portion (11) exhibits a diameter lower than the other cylindrical portion (13).

3. Fast locking element according to claim 2, wherein said central axial hole (7) comprises a threaded portion (10), the central axis of which is aligned with the axis of the more external cylindrical circular portion (13).

4. Fast locking element according to claim 3, wherein said external bushing (3) further exhibits axially an hexagon projection (8) arranged around said central hole (7) on which an hexagon key for rotating the bushing (3) can be inserted.

5. Fast locking element according to claim 4, wherein said external bushing (3) comprises an edge (21) having an elliptical shape preventing that the internal bushing (5) can go out of the external bushing (3), once said internal bushing (5) has been inserted in said external bushing (3).
